Europäisches Patentamt

European Patent Office

Office européen des brevets

(11) Publication number: **0 541 994 A1**

# EUROPEAN PATENT APPLICATION

(21) Application number: 92117833.1

(51) Int. Cl.5: **B01J 38/12**, B01J 23/94

(22) Date of filing: **19.10.92**

(30) Priority: **05.11.91 JP 315188/91**

(43) Date of publication of application:
**19.05.93 Bulletin 93/20**

(84) Designated Contracting States:
**BE CH DE FR GB IT LI NL SE**

(71) Applicant: **IDEMITSU KOSAN COMPANY
LIMITED**
**1−1, Marunouchi 3−chome Chiyoda−ku
Tokyo(JP)**

(72) Inventor: **Noguchi, Yuji, c/o Idemitsu Kosan
Co., Ltd.**
**1280 Kamiizumi**
**Sodegaura−shi, Chiba−ken(JP)**
Inventor: **Itoh, Toshio, c/o Idemitsu Kosan
Co., Ltd.**
**1280 Kamiizumi**
**Sodegaura−shi, Chiba−ken(JP)**

(74) Representative: **Strehl, Schübel−Hopf,
Groening**
**Maximilianstrasse 54 Postfach 22 14 55**
**W−8000 München 22 (DE)**

(54) A process for regenerating hydrocarbon oil hydrogenation catalysts.

(57) A process for regenerating a hydrocarbon oil hydrogenation catalyst comprising a support of an inorganic substance and an active metal component by carrying out oxidative burning of the coke deposited on the catalyst so that the regenerated catalyst has a residual coke content of 0.5 to 10.0 % by weight is disclosed, and the process makes the catalytic activities of the catalyst recovered sufficiently, extends the lifetime of the catalyst in repeated use, prevents the catalyst from damage due to the regeneration, and, in hydrodesulfurization processes, permits omission of presulfurization of the regenerated catalyst.

BACKGROUND OF THE INVENTION

(a) Field of the Invention

The present invention relates to a process for regenerating hydrocarbon oil hydrogenation catalysts supporting metals of Group VIA and/or VIII of the Periodic Table and used for hydrogenating various hydrocarbon oils such as hydrocracking, hydrodesulfurization, hydrodenitrification or hydro-refining of naphtha, gasoline, kerosene, gas oils, vacuum gas oils, atmospheric residues, vacuum residues, petroleums derived from oil sands or oil shale, crude oils, catalytic cracking oils or coal liquefied oils, which minimizes damage to the excellent catalytic functions inherent to the catalysts and reactivates effectively the catalytic functions deactivated during the hydrogenation reactions by the deposition of coke, thereby enabling repeated and effective use of the catalysts.

(b) Description of the Related Art

Hydrodesulfurization of sulfur-containing hydrocarbon oils and hydrodenitrification of nitrogen-containing hydrocarbon oils are very important for preserving the environment by reducing the $SO_x$ and $NO_x$ concentrations in exhaust gases or for smooth operation of subsequent various catalytic conversions of the hydrocarbon oils. Not only such hydrodesulfurization and hydrodenitrification, other hydrogenation techniques including hydrocracking and hydro-refining also have received practical and wide application for converting various material oils to more valuable light distillates or refined oils having controlled H/C ratios.

As described above, the techniques of hydrocarbon oil hydrogenation include various techniques utilizing hydrogenation reactions, such as hydrodesulfurization, hydrodenitrification, hydrocracking, hydro-refining or simple hydrogenation, and include simple ones comprised of single reaction and complicated ones comprised of plural reactions. The material hydrocarbon oils also vary widely depending on the purposes, ranging from mixed hydrocarbon distillates of complicated compositions, such as naphtha, gasolines, kerosenes, gas oils, vacuum gas oils, atmospheric residues, vacuum residues, oils derived from oil sands or oil shale, crude oils, catalytic cracking oils or coal liquefied oils, to mixed hydrocarbons of simple compositions or hydrocarbons of single composition, and the objective product oils also depend on the processes.

In such processes for hydrogenation of hydrocarbon oils, the catalysts used depend on the purposes, and the commonest ones comprise active metal components of Group VIA and/or VIII metals supported on various inorganic supports, such as alumina, silica, silica-alumina or zeolites, with their compositions varied depending on the purposes. Particular examples which have been used suitably for such hydrogenation processes, such as hydrodesulfurization processes, are supported catalysts containing as the active metal components one or more of cobalt, nickel, molybdenum and tungsten, particularly those on $CoO \cdot MoO_3/Al_2O_3$, $NiO \cdot MoO_3/Al_2O_3$ and $NiO \cdot WO_3/Al_2O_3$ bases.

By use in reactions, the activity of these hydrocarbon oil hydrogenation catalysts is reduced due to deposition of coke. When the activity is reduced below a predetermined standard, it is desirable to regenerate the catalysts to use them in reactions repeatedly as much as possible.

In order to regenerate the catalysts by efficiently removing the coke that is the prime cause of the activity reduction, generally, the deactivated catalysts have been treated in an oxygen-containing atmosphere, such as oxygen or air, to burning off the coke by oxidation. The oxidative burning removes off the coke sufficiently, and the catalysts regain the catalytic activities.

The catalysts however are apt to be damaged during the oxidative burning due to exposure to elevated temperatures. That is, though the catalysts deactivated by the deposition of coke can regain the catalytic activities by the oxidative burning of the coke, if they are damaged during the regeneration, their catalytic functions including catalytic activity will decrease with every regeneration as compared with fresh catalysts (catalysts unused in reactions), resulting in a considerably shortened lifetime in repeated use and in a sharp lowering of the process efficiency. Since this kind of hydrocarbon oil hydrogenation catalysts are usually used in reactions under such severe conditions necessitating frequent regeneration of the catalysts, the damage to the catalysts during the regeneration becomes a serious problem. Therefore, there is a demand for effective methods of regenerating the catalysts wherein the damage to the catalysts due to the oxidative burning is inhibited as much as possible.

In the conventional methods of reactivating the hydrocarbon oil hydrogenation catalysts by utilizing the oxidative burning of coke, only the removal of coke has been aimed at. Therefore, in such conventional methods, the target value of the residual coke have been 0 %, and the oxidative burning of coke has been so conducted as to minimize the content of the residual coke, to less than 0.5 % by weight at the worst.

However, since such oxidative burning for reducing the residual coke content to less than 0.5 % by weight requires to expose the catalysts to severe oxidation conditions, such as an atmosphere of a high oxygen concentration, elevated temperatures or a lengthy exposure to the oxidation conditions, problems including the damage to the catalysts are apt to arise even if the recovery of activity could be made by the removal of coke in its own way. In fact, the conventional methods involve the following problems.

Since the oxidative burning in the conventional regenerating methods is aimed at the complete removal of coke, even the active metal components on catalysts are oxidized excessively. In the case of the catalysts used for hydrodesulfurization reactions, sulfurized supported metal components and the metals attached during the reactions (vanadium, nickel and the like) are converted to oxides thereof. The oxidized metal components have considerably decreased melting and boiling points and become apt to melt or scatter at the elevated temperatures during the regeneration. This results in the change of pore structure, such as pore blockage, the decrease of the specific surface area and the decrease of the active sites due to the decrease or deactivation of the supported active metal components, thereby deteriorating the functions of the catalysts, including activity, every regeneration. That is, the conventional methods of regenerating this kind of hydrogenation catalysts involve the problem that the damage to the catalysts in every regeneration makes it difficult to maintain the catalytic functions, resulting in a considerably shortened lifetime of the catalysts in repeated use. Further, the excessive oxidation of the metal components to oxides by the oxidative burning necessitates at every regeneration a presulfurization of the catalysts as a pretreatment prior to use in hydrodesulfurization, or, depending on circumstances, necessitates a reactivation of the catalysts, such as a reduction treatment with hydrogen. Repeating such pretreatments of the catalysts every regeneration takes extra time and cost. Further, fluent repetition of the presulfurization makes it impossible to disregard the sulfur compounds discharged from regenerators, such as sulfur dioxide, and requires the installation of flue gas desulfurization systems.

In Japanese Patent Application Kokai Koho (Laid−open) Nos. 60−94145 and 50−123591 proposed are the methods of inhibiting the excessive evolution of heat during regeneration by carrying out the oxidative burning of coke by steps at a low oxygen concentration. Nevertheless, the methods cannot solve the above−described problems sufficiently since the residual coke is reduced to less than 0.5 % by weight by the regeneration so that the catalysts are oxidized excessively either.

Therefore, there has been an intense demand for a method of regenerating hydrocarbon oil hydrogenation catalysts which does not only remove coke by oxidative burning but also inhibits the damage to the catalysts so effectively as to maintain the catalytic functions including catalytic activity as much as possible and to enable the catalysts to stand repeated use as long as possible.

The present invention was made under these circumstances.

## SUMMARY OF THE INVENTION

The object of the present invention is to solve these problems and to provide an improved method of regenerating hydrocarbon oil hydrogenation catalysts comprising inorganic supports and active metal components of Group VIA and/or VIII metals of the Periodic Table supported on the supports. More particularly, the object of the present invention is to provide an improved and advantageous method of regenerating the catalysts, by which the coke deposited on the catalysts is burnt off to a degree effective in a sufficient recovery of the catalytic functions including catalytic activity, and, at the same time, the damage to the catalysts due to the regeneration, namely the reduction of the original catalytic functions including activities, is inhibited, thereby extending the lifetime of the catalysts in repeated use and, in hydrodesulfurization processes, making the presulfurization of the regenerated catalysts unnecessary.

The inventors studied to attain the object in regenerating various kinds of supported catalysts which contain metal components having catalytic functions for the hydrogenation of hydrocarbon oils. Consequently, they found that without removing the coke deposited on the catalysts to such a low content less than 0.5 % by weight as in the conventional methods, the catalytic functions including catalytic activity could recover sufficiently by removing the coke to some degree. They further found that since the removal of coke became difficult rapidly as the residual coke content approached 0 %, such a reduction of the residual coke content to less than 0.5 % by weight as in the conventional methods required an oxidative burning of coke under drastic conditions, so that the above−described various problems arose due to the excessive oxidation of the catalysts. Thus they hit on the idea that if the target residual coke content was not the very little content of less than 0.5 % by weight but rather at a content enough for the recovery of the activity, the oxidative burning of coke could be carried out under more moderate conditions without oxidising excessively the active metal components, and the damage to the catalysts due to the oxidative burning could be inhibited sufficiently. That is, they found that the object of the present invention could be

EP 0 541 994 A1

attained by controlling the oxidative burning of coke not to reduce the residual coke content excessively but rather to reduce it to a moderate range. On the basis of these findings, they completed the present invention.

The present invention provides a process for regenerating a hydrocarbon oil hydrogenation catalyst which comprises a support comprising an inorganic substance and an active metal component supported on the support and selected from the group consisting of a Group VIA metal of the Periodic Table, a Group VIII metal of the Periodic Table and a mixture thereof, which comprises carrying out oxidative burning of coke deposited on the catalyst, the oxidative burning of the coke being controlled so that the regenerated catalyst has a residual coke content of 0.5 to 10.0 % by weight, with the proviso that the residual coke content is expressed by the reduction in weight after calcining of the regenerated catalyst in an atmosphere of air at 550 ˚C for eight hours as a percentage of the calcined catalyst.

DESCRIPTION OF THE PREFERRED EMBODIMENTS

The process of the present invention may be applied to hydrogenation catalysts of various compositions including conventional hydrocarbon oil hydrogenation catalysts so far as the catalysts comprise a support comprising an inorganic substance and at least one active metal component supported on the support, namely at least one metal selected from the metals of Groups VIA and VIII of the Periodic Table, and catalyze hydrocarbon oil hydrogenation reactions effectively. When these catalysts are regenerated, each catalyst is wholly or partially covered with coke deposited thereon. The catalyst to be regenerated contains more than 0.5 % by weight of coke, usually 1 to 150 % by weight, preferably 5 to 100 % by weight of coke, according to the above − described standard of measuring the residual coke content.

Examples of the support constituting the hydrogenation catalyst include those made of various inorganic materials, such as known supports of this sort of catalysts. Examples of the support or the inorganic material constituting the support include simple oxides, such as alumina, silica, boria, titania, zirconia or magnesia, and various compound oxides thereof, such as silica − alumina, zeolites, silica − titania, alumina − boria, silica − magnesia or silica − zirconia, but are not limited to them. Other supports of various kinds, compositions and forms may be used according to various conditions, such as the kind and composition of the metal component, and also according to the use of the catalyst. For example, in order to obtain sufficient catalytic activities by highly dispersing the active metal components on supports, it is generally preferable to use porous supports, particularly those having pores of a relatively small diameter of 500 angstroms or less. In order to control the properties of the support or the catalyst, including the mechanical strength or the heat resistance, proper binders or additives may be added at the time of forming the support or the catalyst.

Typical examples of the Group VIA metal of the Periodic Table include chromium, molybdenum and tungsten, and typical examples of the Group VIII metal include iron, cobalt, nickel, ruthenium, rhodium, palladium, osmium, iridium and platinum.

The hydrogenation catalyst to be regenerated by the process of the present invention contains at least one of these metals. Preferred metals and preferred compositions depend on other conditions, such as the kind of the support, and on the reaction or process wherein the catalyst is used, and cannot be limited uniformly. For instance, examples of the catalyst that is effective as a hydrogenation catalyst, such as a hydrodesulfurization catalyst, and can be improved outstandingly by the process of the present invention include those containing one or both of molybdenum and tungsten as Group VIA metals and those containing one or both of nickel and cobalt as Group VIII metals. Particularly preferred are those containing one or both of molybdenum and tungsten and one or both of nickel and cobalt.

The amounts of the Group VIA metals and Group VIII metals supported in the hydrogenation catalyst are not particularly limited. Generally, examples of preferred catalysts are a catalyst containing 0.1 to 30 % by weight of Group VIA metals, a catalyst containing 0.1 to 30 % by weight of Group VIII metals, and a catalyst containing both 0.1 to 30 % by weight of Group VIA metals and 0.1 to 30 % by weight of Group VIII metals, based on the total of the catalyst. Particularly preferred are a catalyst containing at least one of molybdenum and tungsten in a total amount of 0.5 to 20 % by weight, a catalyst containing at least one of nickel and cobalt in a total amount of 0.5 to 20 % by weight, and a catalyst containing both at least one of molybdenum and tungsten in a total amount of 0.5 to 20 % by weight and at least one of nickel and cobalt in a total amount of 0.5 to 20 % by weight, based on the total of the catalyst.

Among the catalysts of the various compositions, examples of the catalysts which are particularly suitable as hydrodesulfurization catalysts include cobalt − molybdenum − alumina catalysts, nickel − molybdenum − alumina catalysts, cobalt − nickel − alumina catalysts, nickel − tungsten − alumina catalysts, cobalt − molybdenum − tungsten − alumina catalysts, nickel − molybdenum − tungsten − alumina catalysts and

4

nickal－cobalt－molybdenum－tungsten－alumina catalysts. These catalysts are suitable catalysts not only for hydrodesulfurization but also for other hydrogenation reactions, such as hydrocracking, hydrodenitrification and hydro－refining.

The catalysts which may be regenerated by the process of the present invention are not limited to those above exemplified, and the process of the present invention may be applied to the regeneration of other various hydrogenation catalysts, such as platinum－alumina catalysts, platinum－zeolite catalysts, platinum－silica catalysts or palladium－silica catalysts, which are effective in hydrocracking or hydrogena－tion reactions.

In addition to the above－described Group VIA and VIII metals and inorganic substances as the support components, the hydrogenation catalysts including the catalysts above exemplified may further contain other components,

The method of the preparation of the hydrogenation catalysts is not particularly limited, and the catalysts to be regenerated by the present invention may be prepared by various methods including known methods. For example, the active metal components may be supported by using any method, for examples by known methods, such as impregnation, ion－exchange or kneading.

The uses of the hydrogenation catalysts to be regenerated by the process of the present invention is not particularly limited, and in general, the regeneration process of the present invention is particularly suitable for the hydrogenation catalysts used in the processes of hydrocracking, hydrodesulfurization, hydrodenitrification or hydro－refining various hydrocarbon oils, such as naphtha, gasolines, kerosenes, gas oils, vacuum gas oils, atmospheric residues, vacuum residues, oils derived from oil sands or oil shale, crude oils, catalytic cracking oils or coal liquefied oils. The reaction conditions of the hydrogenation reactions depend on other conditions including the kind of the material oil and the objective reaction, and cannot be specified uniformly. Typical reaction conditions are as follows: a reaction temperature ranging from 300 to 480 ˚C ; and a partial pressure of supplied hydrogen ranging from 10 to 250 kg/cm$^2$. The reaction system is not particularly limited, and various systems, such as a fixed bed, fluidized bed, moving bed, suspension bed or boiling bed, may be employed.

That is, the regeneration process of the present invention is particularly suitable for regenerating the catalysts used for the processes above described. In general, the regenerated catalysts are used in the same reaction as that before the regeneration. However, it is also possible to use the regenerated catalyst for a different reaction from the reaction wherein the catalyst was used before the regeneration.

In the process of regeneration of the present invention, the coke deposited on the catalyst is removed by oxidative burning, and it is important to control the oxidative burning so that the residual coke content ranges from 0.5 to 10.0 % by weight, preferably from 1.0 to 5.0 % by weight. With the proviso that the residual coke content is expressed by the reduction in weight after calcining of the regenerated catalyst in an atmosphere of air at 550 ˚C for eight hours as a percentage of the calcined catalyst.

If the oxidative burning is performed excessively to reduce the residual coke content to less than 0.5 % by weight, the catalyst is exposed to excessively drastic oxidation conditions, for example, in an at－mosphere of a high oxygen concentration, at high temperatures or in a long－term of oxidation atmosphere, and, even if the activity is recovered to some degree by the removal of the coke, other problems, such as damage to the catalyst, are apt to arise. When the oxidative burning is carried out to reduce the residual coke content to less than 0.5 % by weight, even the active metal components on the catalyst are also oxidized excessively. For example, in the case of the catalysts used for hydrodesulfurization, sulfurized metal components or metals attached to the catalysts during the reaction, such as vanadium or nickel, convert into oxides. The oxidized metal components have considerably decreased melting points and volatilization points and melt or scatter easily at the elevated temperatures during regeneration. This changes the pore structure (such as pore blockage), decreases the specific area and reduces the number of active sites (a decrease or deactivation of the active metal components), and the original catalytic functions, such as activity, are deteriorated every regeneration. Thus, there arises a problem of the shortened lifetime of the catalysts in repeated use. Further such an excessive oxidation by the oxidative burning as to convert the metal components into oxides necessitates, every regeneration, a presulfurization of the catalysts prior to their use in hydrodesulfurization or, according to circumstances, necessitates a reactivation of the catalysts, such as a reduction treatment with hydrogen. Repeating such pretreatments of the catalysts every regeneration takes extra time and cost. Further, fluent repetition of the presulfurization makes it impossible to disregard the generation of sulfur compounds, such as sulfur dioxide, discharged from regenerators, and requires the installation of flue gas desulfurization systems.

To the contrary, in accordance with the process of the present invention wherein the oxidative burning is controlled to make the residual coke content of the regenerated catalyst range from 0.5 to 10.0 % by weight, preferably from 1.0 to 5.0 % by weight, the catalytic functions including catalytic activity can be regained by the moderate removal of coke, while the above – described problems, such as the damage to the catalyst, can be avoided sufficiently.

In the regeneration method of the present invention, the conditions of the oxidative burning are not particularly limited insofar as the oxidative burning of coke is controlled to make the residual coke content range from 0.5 to 10.0 % by weight, preferably from 1.0 to 5.0 % by weight. For example, the oxidative burning may be generally carried out at temperatures ranging from 300 to 800 ˚C , preferably from 400 to 650 ˚C . As the gas to be used for the oxidative burning (feed gas), various oxygen – containing gases, including air, may be used, and a suitable oxygen concentration in the feed gas for the oxidation burning is generally 0.3 to 21.0 % by volume, preferably 1.0 to 21.0 % by volume. The suitable amount (velocity) of the feed gas supplied for the oxidative burning ranges generally from 50 to 10000 Ncc/hr, preferably from 100 to 5000 Ncc/hr, per gram of the catalyst to be regenerated. The oxidative burning is preferably controlled so that the gas coming out from the regenerator has an oxygen content of not more than 10 % by volume, preferably not more than 2 % by volume.

The time of the oxidative burning is generally 5 minutes to 20 hours, preferably 10 minutes to 10 hours.

In the regeneration process of the present invention, by adjusting properly the various conditions and the time of treatment, the oxidative burning of coke is controlled to adjust the residual coke content in the regenerated catalyst within the above – described specific range.

In the regeneration method of the present invention, it is desirable to control the regeneration conditions, including the conditions of the oxidative burning, so that the regenerated catalyst has pores of 500 angstroms or less in diameter in an amount of at least 30 % by volume, more preferably at least 50 % by volume, based on the volume of the pores of 500 angstroms or less in diameter in a fresh catalyst. Although controlling the reduction of the pore volume requires more delicate control of regeneration conditions and treating time, the regeneration process of the present invention permits simultaneous and easy control of the residual coke content and pore volume because the oxidative burning of coke can be carried out under moderate conditions. By the simultaneous control for inhibiting the reduction of the pore volume, the lifetime of the catalyst in repeated use can be improved more and more.

In addition to the oxidative burning of coke, according to demand, the regeneration process of the present invention may include other regenerating treatments or procedures, such as steaming treatment or purging of the system with an inert gas. Also, prior to use in catalytic reactions, the regenerated catalyst may be activated by, for example, presulfurization or reduction with hydrogen gas, according to demand.

The catalyst regenerated by the process of the present invention has an extremely improved lifetime in repeated use because of the sufficient recovery of the catalytic functions, including activity, and the very little damage in every regeneration. In many cases, it as well has an advantage in that after the regeneration, it can be used directly for hydrogenation reactions, such as hydrodesulfurization, without pretreatments, such as presulfurization.

That is, the catalyst regenerated by the method of the present invention can be used advantageously as a catalyst for desired processes for hydrogenating various material oils, as exemplified above.

Examples of the present invention are set forth below. It will be understood that these examples are for purposes of illustration only and are not to be construed as limiting the invention.

EXAMPLES 1 TO 6 AND COMPARATIVE EXAMPLES 1 TO 5

In accordance with the method as described in the following (a), hydrogenation reactions of a hydrocarbon oil were carried out by using the hydrogenation catalysts having the compositions as shown in Table 1. The catalysts were then regenerated by the method as described in the following (b) (regeneration by the oxidative burning of coke), and the regenerated catalysts were used again for the hydrogenation reactions of a hydrocarbon oil by the method (a). Investigations were made into the relationships between the properties of the regenerated catalysts, including the residual coke contents, pore volumes, specific areas and residual contents of the metal components (Mo contents), and the hydrogenation results (catalytic functions, such as catalytic activity) after the regeneration, and further into the concentrations of the $SO_2$ emerging from the regenerator used for the regeneration.

The control of the residual coke content in the regeneration was performed by varying the time of the regeneration treatment (oxidative burning). With respect to Examples 2, 4, 5 and 6 and Comparative Examples 2 and 4, the investigations of the properties and reaction results were made on the catalysts that were regenerated after the reaction and regeneration were repeated. The residual coke contents of the regenerated catalysts were expressed by the reductions in weight after calcining of the regenerated catalysts in an atmosphere of air at 550 ˚C for eight hours, as percentages of the calcined catalysts.

6

(a) The method of hydrogenating a hydrocarbon oil (hydro – refining accompanied by hydrodesulfurization, hydrodenitrification and demetalization)

Hydrocarbon oil (material oil):

Arabian heavy vacuum residue having the properties as shown in Table 2 (content of vacuum residues having boiling points of 525 ˚C or higher: 100 % by weight)

Reaction conditions:

Reaction temperature: 450 ˚C ,
Partial pressure of hydrogen (initial pressure): 85 kg/cm$^2$G
Ratio of catalyst/material oil: 10 g/80 g
Reaction time: one hour

Reactor: 300 cc autoclave

Each of the hydrogenations before and after regeneration was carried out by introducing 80 g of the material oil and 10 g of one of the catalysts above described into a 300 cc autoclave, followed by allowing to react them for one hour at 450 ˚C and at an initial hydrogen pressure of 85 kg/cm$^2$G.

(b) Regeneration conditions (conditions of oxidative burning)

Regeneration conditions

Regeneration temperature: 640 ˚C
Regeneration gas: air
Introducing velocity of regeneration gas: 1000 Ncc/hr/gram (catalyst)
Regeneration apparatus and system: fluidized – bed
regeneration system by using a 1000 cc fluidized – bed regenerator
Regeneration time: as listed in Tables 3 to 5
The regenerations of the catalysts were carried out by filling a 1000 cc fluidized – bed regenerator with the catalysts used for the hydrogenation (a) and conducting oxidative burning in a fluidized – bed system at 640 ˚C , while air was being passed through the regenerator at a supply velocity of 1000 Ncc/hr per gram of the catalysts.
The results obtained from Examples 1 – 6 and the Comparative Examples 1 – 5 are listed in Tables 3 – 5,

TABLE 1

|  | Supported metals | Supports |
|---|---|---|
| Examples 1, 2, 5, 6 | Ni(3 wt%) – Mo(8 wt%) | Alumina (100 wt%) |
| Comparative examples 1, 2 | Ni(3 wt%) – Mo(8 wt%) | Alumina (100 wt%) |
| Examples 3, 4 | Co(3 wt%) – Mo(8 wt%) | Alumina – silica(50 – 50 wt%) |
| Comparative examples 3, 4, 5 | Co(3 wt%) – Mo(8 wt%) | Alumina – silica(50 – 50 wt%) |

TABLE 2

| Material oil<br>Properties | Arabian heavy vacuum residue<br>(AH-VR) |
|---|---|
| Specific gravity (15/4 ℃) | 1.0216 |
| Kinematic viscosity (cSt) | |
| 100 ℃ | 1400 |
| 120 ℃ | 400 |
| 150 ℃ | 100 |
| Pour point (℃) | +45.0 |
| Sulfur content (wt%) | 4.85 |
| Nitrogen content (wt%) | 0.324 |
| Metal content (ppm) | |
| Vanadium | 110 |
| Nickel | 34 |
| Iron | 15 |
| Residual carbon (wt%) | 20.5 |
| Total carbon content (wt%) | 84.6 |
| Total hydrogen content (wt%) | 9.9 |
| Composition analysis | |
| Asphaltenes (wt%) | 7.5 |
| Resins (wt%) | 20.9 |
| Aromatics (wt%) | 52.9 |
| Saturated hydrocarbons (wt%) | 18.7 |

TABLE 3

| | Examples | | Comparative Exs. | |
|---|---|---|---|---|
| | 1 | 2 | 1 | 2 |
| Catalyst components | | | | |
| Supported metals (wt%) | Ni-Mo (3-8) | Ni-Mo (3-8) | Ni-Mo (3-8) | Ni-Mo (3-8) |
| Support (wt%) | Alumina (100) | Alumina (100) | Alumina (100) | Alumina (100) |
| Repeated numbers of reaction and regeneration | 1 | 20 | 1 | 20 |
| Regeneration time (hour) (oxidative burning time) | 8.0 | 8.0 | 10.0 | 10.0 |
| Residual coke content on a regenerated catalyst (wt%) | 2.0 | 2.0 | 0.0 | 0.0 |
| Ratio of the volume of pores of 0-500 Å in a regenerated catalyst based on that in a fresh catalyst (%) | 88.4 | 83.2 | 86.4 | 35.5 |
| Specific area of a regenerated catalyst ($m^2/g$) | 126 | 115 | 89 | 35 |
| Mo content of a regenerated catalyst (wt%) | 8.0 | 7.8 | 7.0 | 3.8 |
| $SO_2$ concentration in the gas emerged from the regenerator (ppm) | 123 | 120 | 520 | 530 |
| Reaction products from hydrogenation | | | | |
| Gas ($C_1$-$C_4$) wt% | 11.5 | 11.7 | 12.2 | 12.6 |
| Naphtha ($C_5$-171 ℃) wt% | 17.0 | 17.2 | 17.9 | 18.0 |
| Kerosene and gas oil (171-343 ℃) wt% | 31.2 | 30.8 | 29.6 | 26.6 |
| Vacuum gas oil (343-525 ℃) wt% | 20.8 | 20.6 | 19.5 | 19.6 |
| Vacuum residue (525 ℃ +) wt% | 9.0 | 9.0 | 9.0 | 9.1 |
| Solids insoluble in heptane wt% | 10.5 | 10.7 | 11.8 | 14.1 |

TABLE 4

| | Examples | | Comparative Exs. | |
| --- | --- | --- | --- | --- |
| | 3 | 4 | 3 | 4 |
| Catalyst components | | | | |
| Supported metals (wt%) | Co-Mo (3-8) | Co-Mo (3-8) | Co-Mo (3-8) | Co-Mo (3-8) |
| Support (wt%) | Alumina -silica (50-50) | Alumina -silica (50-50) | Alumina -silica (50-50) | Alumina -silica (50-50) |
| Repeated numbers of reaction and regeneration | 1 | 20 | 1 | 20 |
| Regeneration time (hour) (oxidative burning time) | 8.2 | 8.2 | 10.3 | 10.3 |
| Residual coke content on a regenerated catalyst (wt%) | 2.0 | 2.0 | 0.0 | 0.0 |
| Ratio of the volume of pores of 0-500 $\overset{\circ}{A}$ in a regenerated catalyst based on that in a fresh catalyst (%) | 86.2 | 82.8 | 85.2 | 33.7 |
| Specific area of a regenerated catalyst ($m^2/g$) | 113 | 101 | 76 | 33 |
| Mo content of a regenerated catalyst (wt%) | 8.0 | 7.6 | 7.0 | 3.6 |
| $SO_2$ concentration in the gas emerged from the regenerator (ppm) | 125 | 124 | 540 | 545 |
| Reaction products from hydrogenation | | | | |
| Gas ($C_1$-$C_4$) wt% | 11.7 | 11.9 | 12.4 | 12.8 |
| Naphtha ($C_5$-171 ℃) wt% | 17.3 | 17.5 | 18.2 | 18.3 |
| Kerosene and gas oil (171-343 ℃) wt% | 30.7 | 30.3 | 29.1 | 26.1 |
| Vacuum gas oil (343-525 ℃) wt% | 20.6 | 20.4 | 19.3 | 19.4 |
| Vacuum residue (525 ℃ +) wt% | 9.0 | 9.0 | 9.0 | 9.1 |
| Solids insoluble in heptane wt% | 10.7 | 10.9 | 12.0 | 14.3 |

TABLE 5

| | Examples | | Comparative Ex. |
|---|---|---|---|
| | 5 | 6 | 5 |
| Catalyst components | | | |
| Supported metals (wt%) | Ni-Mo (3-8) | Ni-Mo (3-8) | Ni-Mo (3-8) |
| Support (wt%) | Alumina (100) | Alumina (100) | Alumina (100) |
| Repeated numbers of reaction and regeneration | 20 | 20 | 1 |
| Regeneration time (hour) (oxidative burning time) | 8.4 | 7.1 | 6.8 |
| Residual coke content on a regenerated catalyst (wt%) | 0.6 | 9.5 | 12.5 |
| Ratio of the volume of pores of 0-500 $\overset{\circ}{A}$ in a regenerated catalyst based on that in a fresh catalyst (%) | 76.2 | 35.0 | 25.0 |
| Specific area of a regenerated catalyst ($m^2/g$) | 93 | 76 | 29 |
| Mo content of a regenerated catalyst (wt%) | 7.4 | 8.0 | 8.0 |
| $SO_2$ concentration in the gas emerged from the regenerator (ppm) | 180 | 130 | 115 |
| Reaction products from hydrogenation | | | |
| Gas ($C_1$-$C_4$) wt% | 11.9 | 12.4 | 12.2 |
| Naphtha ($C_5$-171 ℃) wt% | 17.4 | 17.6 | 17.9 |
| Kerosene and gas oil (171-343 ℃) wt% | 30.4 | 29.6 | 27.6 |
| Vacuum gas oil (343-525 ℃) wt% | 20.4 | 19.7 | 19.5 |
| Vacuum residue (525 ℃⁺) wt% | 8.9 | 8.9 | 9.0 |
| Solids insoluble in heptane wt% | 11.0 | 11.8 | 13.8 |

## Claims

1. A process for regenerating a hydrocarbon oil hydrogenation catalyst which comprises a support having an inorganic substance and an active metal component selected from the group consisting of a Group VIA metal of the Periodic Table, a Group VIII metal of the Periodic Table and a mixture thereof, supported on the support, which comprises carrying out oxidative burning of coke deposited on the catalyst, the oxidative burning of the coke being controlled so that the regenerated catalyst has a residual coke content of 0.5 to 10.0 % by weight, with the proviso that the residual coke content is expressed by the weight loss of the regenerated catalyst caused by calcining the regenerated catalyst in an atmosphere of air at 550°C for eight hours, expressed as weight percentage based on the weight of the calcined catalyst.

2. The process as claimed in claim 1, wherein the oxidative burning of the coke is carried out so that the regenerated catalyst has a residual coke content of 1.0 to 5.0 % by weight.

3. The process as claimed in claim 1 or claim 2, wherein the oxidative burning of the coke is carried out so that the regenerated catalyst has pores of not more than 50 nm (500 angstroms) in diameter in an amount of at least 30 % by volume of the volume of pores of not more than 50 nm (500 angstroms) in diameter in a fresh catalyst.

4. The process as claimed in claim 1, wherein the oxidative burning of the coke is carried out at 300 to 800°C for 5 minutes to 20 hours while an oxygen‒containing gas with an oxygen concentration of 0.3 to 21.0 % by volume is being supplied in an amount of 50 to 10,000 Ncc/hr per gram of the catalyst.

5. The process as claimed in claim 4, wherein the oxidative burning of the coke is carried out at 400 to 650°C for 10 minutes to 10 hours while an oxygen‒containing gas with an oxygen concentration of 1.0 to 21.0 % by volume is being supplied in an amount of 100 to 5,000 Ncc/hr per gram of the catalyst.

6. The process as claimed in claim 5, wherein the oxidative burning of the coke is carried out so that the regenerated catalyst has a residual coke content of 1.0 to 5.0 % by weight and has pores of not more than 50 nm (500 angstroms) in diameter in an amount of at least 30 % by volume of the volume of pores of not more than 50 nm (500 angstroms) in diameter in a fresh catalyst.

7. The process as claimed in claim 6, wherein the regenerated catalyst has pores of not more than 50 nm (500 angstroms) in diameter in an amount of at least 50 % by volume of the volume of pores of not more than 50 nm (500 angstroms) in diameter in a fresh catalyst.

8. The process as claimed in any of the claims 1 to 7, wherein the Group VIA metal is selected from the group consisting of molybdenum, tungsten and a mixture thereof.

9. The process as claimed in any of the claims 1 to 7, wherein the group VIII metal is selected from the group consisting of nickel, cobalt and a mixture thereof.

10. The process as claimed in any of the claims 1 to 9, wherein the support comprises an inorganic substance selected from the group consisting of alumina, silica, boria, titania, zirconia, magnesia, silica‒alumina, a zeolite, silica‒titania, alumina‒boria, silica‒magnesia, silica‒zirconia and a mixture thereof.

11. The process of claim 5, wherein the catalyst comprises alumina, nickel and molybdenum or comprises alumina‒silica, molybdenum and cobalt, and the oxidative burning of the coke is carried out so that the regenerated catalyst has a residual coke content of 1.0 to 5.0 % by weight and has pores of not more than 50 nm (500 angstroms) in diameter in an amount of at least 30 % by volume of the volume of pores of not more than 50 nm (500 angstroms) in diameter in a fresh catalyst.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 310 163 (SHELL)<br>* abstract *<br>* page 3, line 4 - line 29 *<br>* page 3, line 45 - line 56 *<br>* example 1 * | 1-11 | B01J38/12<br>B01J23/94 |
| X | US-A-4 751 210 (DE AGUDELO ET AL)<br>* abstract *<br>* column 5; table III *<br>* column 3, line 44 - line 53 * | 1-11 | |
| D,A | FR-A-2 255 956 (HICKMAN ET AL) | 1-11 | |

TECHNICAL FIELDS SEARCHED (Int. Cl.5 )

B01J

The present search report has been drawn up for all claims

| Place of search | Date of completion of the search | Examiner |
|---|---|---|
| THE HAGUE | 13 JANUARY 1993 | LO CONTE C. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)